# FASCICULE DE BREVET EUROPEEN

(11) **EP 2 007 260 B1**
(45) Date de publication et mention de la délivrance du brevet: **14.10.2009**
(21) Numéro de dépôt: 07731028.2
(22) Date de dépôt: 22.02.2007
(51) Int. Cl.: A47J 45/10

(54) **DISPOSITIF DE PREHENSION AMOVIBLE**
ENTFERNBARE GREIFVORRICHTUNG
DETACHABLE GRIP DEVICE

(30) Priorité: 06.03.2006 FR 0601986
(43) Date de publication de la demande: 31.12.2008
(73) Titulaire: SEB SA, 69130 Ecully (FR)
(72) Inventeur: LORTHIOIR, Christophe, F-74150 Bloye (FR)
(74) Mandataire: Lemoine, Jean-Sébastien
(86) Numéro de dépôt international: PCT/FR2007/000323
(87) Numéro de publication internationale: WO 2007/101923

(56) Documents cités:
- FR-A1- 2 842 718
- US-B1- 6 257 439

## Description

La présente invention concerne un dispositif de préhension amovible du type comprenant un corps de préhension qui possède un organe fixe formant pince et qui s'étend selon une direction longitudinale, un organe mobile formant pince mobile par rapport à l'organe fixe formant pince selon la direction longitudinale entre une position ouverte et une position fermée dans laquelle les deux organes formant pince sont adaptés à pincer une paroi latérale d'un ustensile culinaire, des moyens de déplacement adaptés à être commandés manuellement entre une position d'ouverture et une position de fermeture, à entraîner le déplacement de l'organe mobile formant pince de sa position ouverte à sa position fermée quand ils passent de leur position d'ouverture à leur position de fermeture, et conformés de sorte que, quand ils sont dans leur position de fermeture, la distance séparant les deux organes formant pince en position fermée correspond à l'épaisseur de la paroi latérale pincée, et des moyens de blocage adaptés à immobiliser l'organe mobile formant pince dans sa position fermée ajustée à l'épaisseur de la paroi pincée

Un tel dispositif de préhension est décrit dans la demande de brevet FR 2 842 718 et la demande européenne équivalente où les moyens de blocage sont formés un pion de blocage monté sur le levier et adapté à pénétrer, quand le levier est en position escamotée, dans un logement dont la section de passage dépend de la position de l'organe mobile formant pince en position fermée. Cependant, dans ce document, du fait de la forme du pion de blocage et du logement qui est formé par une fente réalisée dans l'organe mobile formant pince et par une cavité réalisée dans le corps de préhension, le pion a tendance a pivoté dans la cavité autour d'un axe défini par son point de contact avec le rebord de la fente de l'organe mobile formant pince. Il s'en suit que soit l'organe mobile formant pince peut s'écarter de sa position fermée ajustée (si le pivotement du pion se fait pendant la manipulation d'un ustensile culinaire), soit l'efficacité des moyens de blocage est diminuée (si le pion a subi une déformation quite à de nombreuses sollicitations). Dans un mode de réalisation particulier, de ce document, afin déviter ces inconvénients, le pion présente des marches. Cependant, dans ce cas, l'ajustement de la position de l'organe formant pince est réalisé à l'écart séparant deux marches consécutives près.

La présente invention vise à réaliser un dispositif de préhension amovible comprenant des moyens de blocage permettant d'immobiliser de façon sûre l'organe formant pince en position fermée dans une position ajustée à l'épaisseur de la paroi de l'ustensile culinaire pincé.

Selon l'invention, les moyens de blocage du dispositif de préhension amovible du type précité sont montés mobiles sur le corps de préhension selon une direction de frottement perpendiculaire à la direction longitudinale, entre une position de libération dans laquelle ils ne gênent pas le déplacement de l'organe mobile formant pince, et une position de blocage dans laquelle ils immobillisent cet organe à sa position ajustée fermée par frottement.

En utilisant des moyens de blocage qui sont mobiles entre une position de libération et une position de blocage, l'organe mobile formant pince peut être immobilisé dans sa position fermée ajustée de façon sûre, l'immobilisation n'étant pas due à une simple pénétration d'un pion dans une fente réalisée dans l'organe mobile formant pince du fait du pivotement du levier portant le pion, mais par le déplacement de moyens qui sont portés par le corps de préhension et qui de ce fait, sont, quelle que soit leur position, à proximité immédiate de l'organe mobile formant pince. De plus, étant donné qu'il n'est pas nécessaire que l'organe mobile formant pince présente à un endroit particulier une configuration pour coopérer avec les moyens de blocage, son immobilisation se fait précisément à la position fermée ajustée.

D'autres particularités et avantages de la présente invention apparaîtront dans la description de quatre modes de réalisation donnés à titre d'exemples non limitatifs et illustrés dans les dessins dans lesquels :

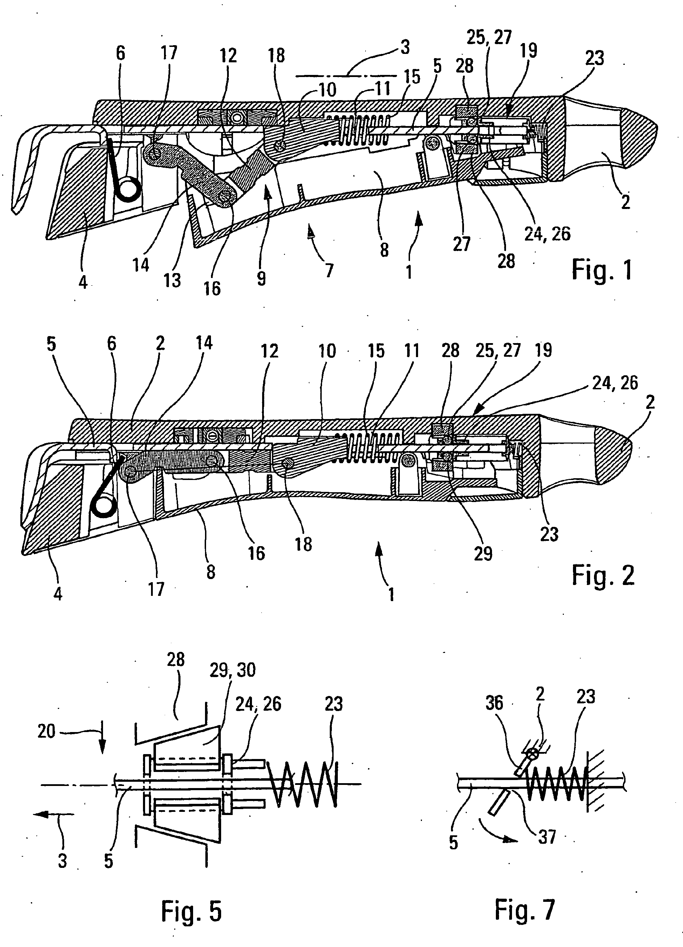

La figure 1 est une vue en coupe longitudinale d'un dispositif de préhension amovible conforme à un premier mode de réalisation de la présente invention, l'organe mobile formant pince étant en position ouverte et les moyens de blocage sont dans leur position de libération,
La figure 2 est une vue similaire à la figure 1, l'organe mobile formant pince étant en position fermée et les moyens de blocage sont dans leur position de blocage,

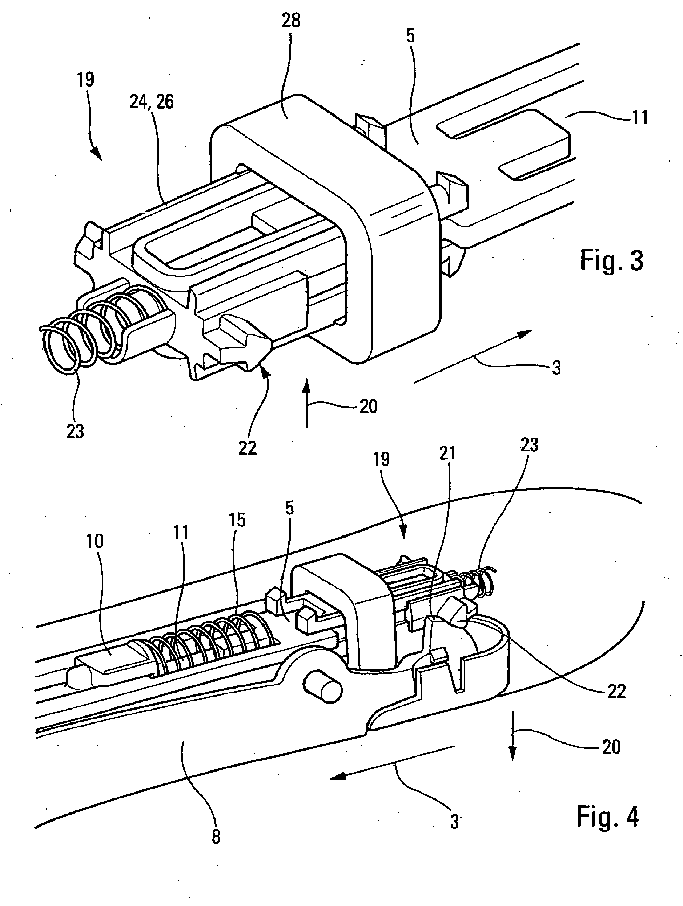

La figure 3 est une vue en perspective des moyens de blocage du premier mode de réalisation,
La figure 4 est une vue en perspective illustrant la coopération entre les moyens de blocage du premier mode de réalisation et le levier,
La figure 5 est un schéma illustrant les moyens de blocage d'un second mode de réalisation de la présente invention,

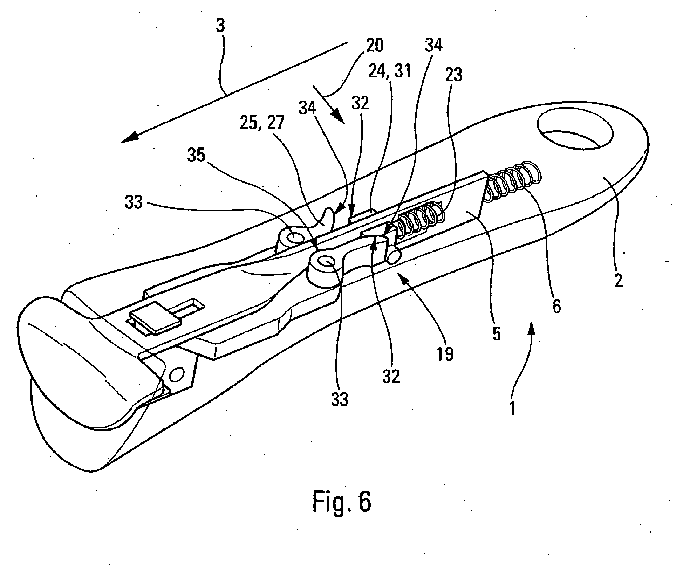

La figure 6 est une vue en perspective des moyens de blocage selon un troisième mode de réalisation de la présente invention, et
La figure 7 est un schéma illustrant les moyens de blocage d'un quatrième mode de réalisation de la présente invention.

Les figures illustrent un dispositif de préhension amovible 1 qui est utilisé pour saisir un ustensile culinaire, notamment par la paroi latérale de ce dernier.

Le dispositif de préhension amovible 1 comprend un -corps de préhension 2 qui s'étend principalement selon une direction longitudinale 3 et qui possède un organe fixe formant pince 4 disposé à une première extrémité du corps de préhension 2. Le dispositif de préhension amovible 1 comprend également un organe mobile formant pince 5 qui est monté de façon mobile par rapport à l'organe fixé formant pince 3 selon la direction longitudinale 2 (ici en translation) entre une position ouverte et une position fermée dans laquelle les deux organes formant pince 4,5 sont adaptés à pincer la paroi latérale d'un ustensile culinaire. Dans les présents modes de réalisation, l'organe mobile formant pince 5 est sollicité dans sa position ouverte par un ressort d'ouverture 6 (ici en ressort de torsion) qui prend appui, par une extrémité, sur le corps de préhension 2, et, par une autre extrémité, sur l'organe mobile formant pince 5.

Afin de permettre à un utilisateur de commander manuellement le déplacement de l'organe mobile formant pince 5, le dispositif de préhension amovible 1 comprend des moyens de déplacement 7 qui sont adaptés à être commandés manuellement entre une position d'ouverture et une position de fermeture, et à entraîner le déplacement de l'organe mobile formant pince 5 de sa position ouverte à sa position fermée quand ils passent de leur position d'ouverture à leur position de fermeture. Dans les présents modes de réalisation, les moyens de déplacement 7 comprennent un levier 8 qui est adapté à être commandé manuellement, et des moyens de transmission 9 qui sont adaptés à transmettre le déplacement du levier 8 à l'organe mobile formant pince 5. Le levier 8 est monté de façon rotative sur le corps de préhension 8 entre une position déployée et une position escamotée qui correspondent, respectivement, aux positions d'ouverture et de fermeture des moyens de déplacement 7. Les moyens de transmission 9 comprennent un coulisseau 10 qui est monté en translation selon la direction longitudinale 2 par rapport au corps de préhension 2 (en l'occurrence il est monté coulissant le long d'une rainure 11 réalisée le long de l'organe mobile formant pince 5), une première bielle 12 qui est montée de façon pivotante autour d'un arbre 18, par une première extrémité, au coulisseau 10, et, de façon coulissante, par une seconde extrémité, dans une rainure 13 portée par le levier 8, et une seconde bielle 14 qui est montée de façon pivotante, autour d'un arbre 17, par une première extrémité au corps de préhension 2 et par une seconde extrémité, autour d'un arbre 16, à la seconde extrémité de la première bielle 12 (et donc de façon coulissante dans la rainure 13 portée par le levier 8).

Par ailleurs, les moyens de déplacement 7, sont conformés de sorte que, quand ils sont dans leur position de fermeture (et donc quand l'organe mobile formant pince 5 est dans sa position fermée), la distance séparant les deux organes formant pince 4,5 en position fermée correspond à l'épaisseur de la paroi latérale pincée. Dans les présents modes de réalisation, ceci est réalisé par la présence d'un ressort de compensation 15 qui prend appui, par sa première extrémité, sur le coulisseau 10 (et donc sur les moyens de déplacement 7), et par sa seconde extrémité, à l'organe mobile formant pince 5.

De plus, dans les présents modes de réalisation, les moyens de déplacement 7 sont conformés de façon à être dans un état stable aussi bien dans leur position d'ouverture que dans leur position de fermeture, et à passer de l'une à l'autre de ces deux positions d'équilibre stable via une position intermédiaire d'équilibre instable. Ici, la position d'équilibre instable des moyens de déplacement 7 (et donc celle du levier 8) est définie comme étant la position dans laquelle l'arbre 16 de liaison entre la première et la seconde bielles 12,14 traverse la droite définie par l'arbre 17 de liaison entre la seconde bielle 14 et le corps de préhension 2 et l'arbre 18 de liaison entre la première bielle 12 et le coulisseau 10.

Par ailleurs, afin d'éviter tout écartement de l'organe mobile formant pince 5 quand il est en position fermée (par exemple, du fait d'une charge importante contenue dans l'ustensile culinaire pincé), le dispositif de préhension amovible 1 comprend des moyens de blocage 19 qui sont adapté à bloquer l'organe mobile formant pince 5 dans sa position fermée ajustée à l'épaisseur de la paroi latérale pincée.

Conformément à la présente invention, les moyens de blocage 19 sont montés mobiles sur le corps de préhension 2 entre une position de libération et une position de blocage dans laquelle ils immobilisent l'organe mobile formant pince 5 dans sa position fermée ajustée par frottement.

Dans les présents modes de réalisation, les moyens de blocage 19 s'étendent, quelle que soit leur position, de part de d'autre de l'organe mobile formant pince 5 selon une direction de frottement 20 qui est perpendiculaire à la direction longitudinale 3 et ils sont adaptés à immobiliser l'organe mobile formant pince 5 par pincement.

Dans les présents modes de réalisation, les moyens de blocage 19 sont déplacés de l'une à l'autre de leurs positions par le déplacement des moyens de déplacement 7. De façon plus précise, ils sont déplacés par le levier 8 : ce dernier comprend (à proximité de sa liaison avec le corps de préhension 2) des ergots de déplacement 21 qui sont adaptés à coopérer avec une surface de réception 22 portée par les moyens de blocage 19 de façon à permettre, dans les présents modes de réalisation, un déplacement des moyens de blocage 19 selon la direction longitudinale 3. De plus, les moyens de blocage 19 sont sollicités dans leur position de blocage par un ressort de blocage 23. En outre, les moyens de blocage 19 coopèrent avec le corps de préhension amovible 2 de sorte que leur mouvement de translation dans la direction longitudinale 3 généré par le pivotement du levier 8 entraîne également leur déplacement selon la direction de frottement 20. De façon à permettre un pincement de l'organe mobile formant pince 5 uniquement quand il est effectivement dans sa position fermée ajustée, les moyens de blocage 19 et les moyens de déplacement 7 sont agencés l'un à l'autre de sorte que les moyens de blocage 19 passent dans leur position de blocage quand les moyens de déplacement 7 sont entre leur position d'équilibre instable et leur position de fermeture. Ceci est réalisé par les formes respectives des ergots de déplacement 21 et de la surface de réception 22 qui font office de surface de came.

Dans les premier, deuxième et troisième modes de réalisation, les moyens de blocage 19 comprennent des moyens de commande 24 et des moyens de pincement 25. Les moyens de commande 24 sont mobiles (ici en translation) selon la direction longitudinale 3 entre une position de déverrouillage et une position de verrouillage. Ce sont eux qui sont déplacés par les moyens de déplacement 7 et sollicités par le ressort de blocage 23 vers leur position de verrouillage. Les moyens de pincement 25 sont montés mobiles selon la direction de frottement 20 entre leur position de pincement dans laquelle ils pincent et immobilisent l'organe mobile formant pince et une position de libération. Leur mouvement est commandé par le déplacement des moyens de commande 24 et par leur coopération avec le corps de préhension 2.

Dans les premier et second modes de réalisation, les moyens de commande 24 sont formés par une cage 26 qui entoure l'organe mobile formant pince 5, les moyens de pincement 25 étant formés par deux organes de pincement 27 qui sont montés mobiles en translation selon la direction de frottement 20 dans la cage 26, de part et d'autre de l'organe mobile formant pince 5. Par ailleurs, le corps de, préhension 2 comprend deux rampes 28 qui sont chacune disposée de par et d'autre de l'organe mobile formant pince 5 et à proximité immédiate d'un organe de pincement 27 correspondant. Ainsi, quand la cage 26, sous l'action du ressort de blocage 23 et du fait du déplacement du levier 8, est entraînée dans sa position de verrouillage, les organes de pincement 27 qui sont montés de façon solidaires dans la cage 26 dans le déplacement dans la direction longitudinale 3, sont entraînés dans la direction de frottement 20 par réaction contre les rampes 28 jusqu'au pincement de l'organe mobile formant pince 5.

Dans le premier mode de réalisation, les deux organes de pincement 27 sont formés par deux cylindres 29 montés de façon libre en rotation dans la cage 26.

Dans le second mode de réalisation, les deux organes de pincement 27 sont formés par deux patins 30, chaque patin 30 possédant du côté de l'organe mobile formant pince 5 un revêtement de friction (du type de celui utilisé sur les dispositifs de freinage ou d'embrayage dans les véhicules automobiles), et, du côté opposé, une surface sensiblement parallèle à la rampe 28 correspondante portée par le corps de préhension 2.

Dans le troisième mode de réalisation, les moyens de commande 24 sont formés par un pion 31 qui possède une surface de commande 32 s'étendant de part et d'autre de l'organe mobile formant pince 5, les moyens de pincement 25 étant formés par deux organes de pincement 27 qui sont montés, de part et d'autre de l'organe mobile formant pince 5, de façon mobiles en rotation autour d'un arbre 33 fixé au corps de préhension 2 et s'étendant selon une direction perpendiculaire aux directions longitudinale 3 et de frottement 20. En l'occurrence, chaque organe de pincement 27 porte une surface de réception 34 adaptée à coopérer avec la surface de commande 32 de sorte que le déplacement du pion 31 vers sa position de verrouillage entraîne une rotation des deux organes de pincement 27 autour de l'arbre 33 correspondant. De plus, chaque organe de pincement 27 porte également une surface de pincement 35 qui est excentrée par rapport à l'arbre 33 de façon à être en contact de pincement avec l'organe mobile formant pince 5 quand l'organe de pincement 27 est dans sa position de pincement. Ainsi, quand le pion 31, sous l'action du ressort de blocage 23 et du fait du déplacement du levier 8, est entraîné dans sa position de verrouillage, les organes de pincement 27, par la coopération entre la surface de réception 34 et la surface de commande 32, sont pivotés jusqu'àu pincement de l'organe mobile formant pince 5 réalisé par la surface de pincement 35.

Dans le quatrième mode de réalisation, les moyens de blocage 19 comprennent (et plus précisément, sont formés par) une lame 36 qui est montée pivotante par rapport au corps de préhension 2 selon une direction perpendiculaire à la direction longitudinale, et qui comporte une ouverture 37 traversée par l'organe mobile formant pince 5. La section droite de l'organe mobile formant pince 5 est légèrement inférieure à celle de l'ouverture 37 de sorte que, plus l'inclinaison de la lame 36 par rapport à l'organe mobile formant pince 5 s'éloigne de la perpendiculaire, plus la périphérie de l'ouverture 37 se rapproche de l'organe mobile formant pince 5 jusqu'à venir en contact de deux côtés opposés et réaliser le pincement. Le ressort de blocage 23 prend appui, d'une part, contre la lame 36, et, d'autre part contre le corps de préhension 2.

La présente invention n'est pas limitée aux modes de réalisation décrits ci-dessus.

Il serait ainsi possible que les moyens de blocage soient formés par un écrou rapide à pas fin monté sur une tige filetée.

## Revendications

1. Dispositif de préhension amovible (1) comprenant un corps de préhension (2), un organe mobile formant pince (5) qui est mobile selon la direction longitudinale (3), par rapport à un organe fixe formant pince (4) porté par le corps de préhension (2), entre une position ouverte et une position fermée dans laquelle les deux organes formant pince (4,5) sont adaptés à pincer une paroi latérale d'un ustensile culinaire, des moyens de déplacement (7) qui sont adaptés à être commandés manuellement entre une position d'ouverture et une position de fermeture, et à entraîner le déplacement de l'organe mobile formant pince (5) de sa position ouverte à sa position fermée quand ils passent de leur position d'ouverture à leur position de fermeture, et qui sont conformés de sorte que quand ils sont dans leur position de fermeture, la distance séparant les deux organes formant pince (4,5) en position fermée est ajustée à l'épaisseur de la paroi latérale pincée, et des moyens de blocage (19) qui sont adaptés à immobiliser l'organe mobile formant pince (5) dans sa position fermée ajustée, **caractérisé en ce que** les moyens de blocage (19) sont mobiles sur le corps de préhension (2) selon une direction de frottement (20) perpendiculaire à la direction longitudinale (3) entre une position de libération dans laquelle ils ne gênent pas le déplacement de l'organe mobile formant pince (5) et une position de blocage dans laquelle ils immobilisent cet organe (5) dans sa position fermée ajustée par frottement.

2. Dispositif de préhension amovible (1) selon la revendication 1, **caractérisé en ce que** les moyens de blocage (19) sont déplacés de l'une à l'autre de leurs positions par le déplacement des moyens de déplacement (7), et sont sollicités dans leur position de blocage par un ressort de blocage (23).

3. Dispositif de préhension amovible (1) selon la revendication 1 ou 2, **caractérisé en ce que** les moyens de blocage (19) s'étendent de part de d'autre de l'organe mobile formant pince (5) selon la direction de frottement (20) quelle que soit leur position et immobilisent l'organe mobile formant pince (5) par pincement.

4. Dispositif de préhension amovible (1) selon la revendication 3, **caractérisé en ce que** les moyens de blocage (19) comprennent une lame (36) montée pivotante sur le corps de préhension (2), et comportent une ouverture (37) traversée par l'organe mobile formant pince (5) dont la section droite est légèrement inférieure à celle de l'ouverture (37) de sorte que, quand la lame (36) est entraînée dans sa position de blocage du fait de l'action des moyens de déplacement (7) et du ressort de blocage (23), l'immobilisation de l'organe mobile formant pince(5) est réalisée par son pincement par la périphérie de l'ouverture (37).

5. Dispositif de préhension amovible (1) selon la revendication 3, **caractérisé en ce que** les moyens de blocage (19) comprennent, d'une part, des moyens de commande (24) qui sont mobiles, du fait de l'action des moyens de déplacement (7) et du ressort de blocage (23), selon la direction longitudinale (3) entre une position de déverrouillage et une position de verrouillage, et, d' autre part, des moyens de pincement (25) qui sont montés mobiles selon la direction de frottement (20) du fait du déplacement des moyens de commande (24) et de leur coopération avec le corps de préhesion (2), entre une position de libération et une position de pincement dans laquelle ils immobilisent l'organe mobile formant pince (5).

6. Dispositif de préhension amovible (1) selon la revendication 5, **caractérisé en ce que** les moyens de pincement (25) sont formés par deux organes de pincement (27) montés de part et d'autre de l'organe mobile formant.pince (5).

7. Dispositif de préhension amovible (1) selon la revendication 6, **caractérisé en ce que** chaque organe de pincement (27) est monté mobile en rotation autour d'un arbre (33) fixé au corps de préhension (2) et porte d'une part, une surface de pincement (35) qui est excentrée par rapport à l'arbre (33) de façon à pincer l'organe mobile formant pince (5) quand l'organe de pincement (27) est dans sa position de pincement, et, d'autre part, une surface de réception (34) adaptée à coopérer avec une surface de commande (32) portée par un pion (31) formant les moyens de commande (24), de façon à permettre la rotation de l'organe de pincement (27) quand le pion (33) est déplacé.

8. Dispositif de préhension amovible (1) selon la revendication 6, **caractérisé en ce que** les moyens de commande (24) sont formés par une cage (26) dans laquelle les organes de pincement (27) sont montés de façon solidaire dans le déplacement dans la direction longitudinale (3), le corps de préhension (2) portant de chaque côté de l'organe mobile formant pince (5) une rampe (28) orientée de façon à recevoir et à entraîner l'organe de pincement (27) correspondant dans sa position de pincement quand la cage (26) est entraînée dans sa position de verrouillage.

9. Dispositif de préhension amovible (1) selon la revendication 8, **caractérisé en ce que** chaque organe de pincement (27) est formé par un cylindre (29).

10. Dispositif de préhension amovible (1) selon la revendication 8, **caractérisé en ce que** chaque organe de pincement (27) est formé par un patin (30) qui possède, du côté de l'organe mobile formant pince (5), un revêtement de friction, et, du côté opposé, une surface sensiblement parallèle à la rampe (28) correspondante.

11. Dispositif de préhension amovible (1) selon l'une des revendications 1 à 10, **caractérisé en ce que** les moyens de déplacement (7) sont conformés de façon à être dans un état stable aussi bien dans leur position d'ouverture que dans leur position de fermeture, et à passer de l'une à l'autre de ces deux positions via une posiiton intermédiaire d'équilibre instable.

12. Dispositif de préhension amovible selon la revendication 11, dépendante de la revendication 2 ou d'une revendication qui en dépend, **caractérisé en ce que** les moyens de blocage (19) et les moyens de déplacement (7) sont agencés l'un par rapport à l'autre de sorte que les moyens de blocage (19) passent dans leur positon de blocage quand les moyens de déplacement (7) sont entre leur position d'équilibre instable et leur position de fermeture.

13. Dispositif de préhension amovible selon l'une des revendications 1 à 12, **caractérisé en ce que** les moyens de déplacement (7) comprennent un levier (8) adapté à être commandé manuellement et à déplacer les moyens de blocage (19).

## Claims

1. Detachable grip device (1) comprising a grip body (2), a mobile element that forms a grip (5) that can move in the longitudinal direction (3) with respect to a fixed element that forms a grip (4) supported by the grip body (2), between an open position and a closed position in which the two elements that form a grip (4, 5) are adapted to grip the lateral wall of a kitchen utensil, said detachable grip device (1) comprising movement means (7) that are adapted to be manually commanded between an opening position and a closing position, to move the mobile element that forms the grip (5) from its open position to its closed position when they change from their opening position to their closing position, and which are conformed so that, when they are in their closing position, the distance separating the two elements that form the grip (4, 5) in the closed position is adjusted to the thickness of the lateral gripped wall, and said detachable grip device (1) comprising blocking means (19) which are adapted to block the mobile element that forms a grip (5) in its closed adjusted position,
**characterised in that** the blocking means (19) are mobile on the grip body (2) according to a direction of friction (20) that is perpendicular to the longitudinal direction (3), between a releasing position in which they do not obstruct the movement of the mobile element that forms a grip (5), and a blocking position in which they immobilise this element (5) in its closed adjusted position by friction.

2. Detachable grip device (1) of claim 1, **characterised in that** the blocking means (19) are moved from one of their positions to the other by the movement of the movement means (7), and are solicited in their blocking position by a blocking spring (23).

3. Detachable grip device (1) of claims 1 or 2,
**characterised in that** the blocking means (19) extend on either side of the mobile element that forms a grip (5) according to the direction of friction (20) regardless of their position, and they immobilise the mobile element that forms a grip (5) by clamping.

4. Detachable grip device (1) of claim 3, **characterised in that** the blocking means (19) comprise a blade (36) mounted so that it pivots on the grip body (2) and which has an opening (37) through which passes the mobile element that forms a grip (5), of which the straight section of the latter is slightly smaller than that of the opening (37) so that, when the blade (36) is moved to its blocking position by the action of the movement means (7) and the blocking spring (23), the mobile element that forms a grip (5) is immobilised by the clamping on the periphery of the opening (37).

5. Detachable grip device (1) of claim 3, **characterised in that** the blocking means (19) comprise on the one hand, command means (24) that are mobile, due to the action of the movement means (7) and the blocking spring (23), according to the longitudinal direction (3) between an unlocking position and a locking position, and on the other hand, clamping means (25) which have a mounting that is mobile in the direction of friction (20) due to the movement of the command means (24) and their engagement with the grip body (2), between a freeing position and a clamping position in which they immobilise the mobile element that forms a grip (5).

6. Detachable grip device (1) of claim 5, **characterised in that** the clamping means (25) are formed by two clamping elements (27) mounted on either side of the mobile element that forms a grip (5).

7. Detachable grip device (1) of claim 6, **characterised in that** each clamping element (27) is mounted so that it is mobile in rotation around a shaft (33) attached to the grip body (2) and bears on the one hand a clamping surface (35) that is eccentric with respect to the shaft (33), so that it grips the mobile element that forms a grip (5) when the clamping element (27) is in its clamping position, and on the other hand a receiving surface (34) adapted to engage with a command surface (32) supported by a pin (31) forming the command means (24), so as to permit rotation of the clamping element (27) when the pin (33) is moved.

8. Detachable grip device (1) of claim 6, **characterised in that** the command means (24) are formed by a cage (26), in which the clamping elements (27) are mounted so that they are attached in the movement in the longitudinal direction (3), wherein the grip body (2) has on either side of the mobile element that forms a grip (5) a ramp (28) orientated so that it can receive and drive the corresponding clamping element (27) to its clamping position when the cage (26) is driven to its locking position.

9. Detachable grip device (1) of claim 8, **characterised in that** each clamping element (27) is formed by a cylinder (29).

10. Detachable grip device (1) of claim 8, **characterised in that** each clamping element (27) is formed by a pad (30) which has, on the side of the mobile element that forms a grip (5), a friction lining and, on the opposite side, a surface that is substantially parallel to the corresponding ramp (28).

11. Detachable grip device (1) of any of claims 1 to 10,
**characterised in that** the movement means (7) are conformed so that they are in a stable state both in their opening position as in their closing position, and to pass from one to the other of these positions via an intermediate unstable equilibrium position.

12. Detachable grip device of claim 11, dependent on claim 2 or any claim which depends on it, **characterised in that** the blocking means (19) and the movement means (7) are positioned with respect to one another so that the blocking means (19) move to their blocking position when the movement means (7) are between their unstable equilibrium position and their closing position.

13. Detachable grip device of any of claims 1 to 12,
**characterised in that** the movement means (7) comprise a lever (8) adapted to be commanded manually and to move the blocking means (19).

## Patentansprüche

1. Entfernbare Greifvorrichtung (1), umfassend einen Greifkörper (2), ein bewegliches, eine Klemme bildendes Bauteil (5), das in Längsrichtung (3) beweglich ist gegenüber einem eine Klemme bildenden, ortsfesten und vom Greifkörper (2) getragenen Bauteil (4) zwischen einer offenen Position und einer geschlossenen Position, in der die beiden eine Klemme bildenden Bauteile (4, 5) zum Klemmen einer seitlichen Wand eines Essutensils geeignet sind, Verlagerungseinrichtungen (7), die zwischen einer Öffnungsposition und einer Schließposition manuell betätigbar sind und die Verlagerung des beweglichen, eine Klemme bildenden Bauteils (5) aus dessen offener Position in dessen geschlossene Position veranlassen, wenn sie aus deren Öffnungsposition in deren Schließposition gelangen, und die derart angepasst sind, dass, wenn sie in deren Schließposition sind, der Abstand zwischen den beiden eine Klemme bildenden Bauteilen (4, 5) in der geschlossenen Stellung auf die Dicke der geklemmten Seitenwand eingestellt ist, und Blockiereinrichtungen (19) zum feststellen des eine Klemme bildenden Bauteils(5) in dessen eingestellter geschlossener Position, **dadurch gekennzeichnet, dass** die Blockiereinrichtungen (19) auf dem Greifkörper (2) in einer Reibungsrichtung (20) rechtwinklig zur Längsrichtung (3) zwischen einer Freigabeposition, in der sie das Verschieben des beweglichen, eine Klemme bildenden Bauteils (5) nicht behindern, und einer Blockierposition, in der sie das Bauteil (5) in dessen durch Reibung eingestellter geschlossener Position feststellen, beweglich sind.

2. Entfernbare Greifvorrichtung (1) nach Anspruch 1, **dadurch gekennzeichnet, dass** die Blockiereinrichtungen (19) von einer zur anderen ihrer Positionen durch die Verlagerung der Verlagerungseinrichtung (7) verlagert werden, und in ihrer Blockierposition durch eine Blockierfeder (23) festgehalten werden.

3. Entfernbare Greifvorrichtung (1) nach einem der Ansprüche 1 oder 2, **dadurch gekennzeichnet, dass** sich die Blockiereinrichtungen in allen deren Positionen gemäß der Reibungsrichtung (20) beiderseits des beweglichen, eine Klemme bildenden Bauteils (5) erstrecken und das bewegliche, eine Klemme bildende Bauteil (5) durch Klemmen feststellen.

4. Entfernbare Greifvorrichtung (1) nach Anspruch 3, **dadurch gekennzeichnet, dass** die Blockiereinrichtungen (19) eine Platte (36) umfassen, die drehbar auf dem Greifkörper (2) angebracht ist, und eine Öffnung (37) aufweist, durch die das bewegliche, eine Klemme bildende Bauteil (5), dessen Längsquerschnitt geringfügig kleiner ist als der der Öffnung (37), hindurchragt, dergestalt dass, wenn die Platte (36) durch die Wirkung der Verlagerungseinrichtung (7) und der Blockierfeder (23) in ihre Blockierposition bewegt wird, die Feststellung des beweglichen, eine Klemme bildenden Bauteils (5) durch dessen Einklemmung von der Innenkante der Öffnung (37) realisiert wird.

5. Entfernbare Greifvorrichtung (1) nach Anspruch 3, **dadurch gekennzeichnet, dass** die Blockiereinrichtungen (19) zum einen Betätigungseinrichtungen (24), die zwischen einer Entriegelungsposition und einer Verriegelungsposition durch die Funktion der Verlagerungseinrichtungen (7) und der Blockierfeder (23) in der Längsrichtung (3) beweglich sind, und zum anderen Klemmeinrichtungen (25), die durch die Verlagerung der Betätigungseinrichtungen (24) und deren Zusammenwirken mit dem Greifkörper (2) gemäß der Reibungsrichtung (20) beweglich gelagert sind zwischen einer Freigabeposition und einer Klemmposition, in der sie das bewegliche, eine Klemme bildende Bauteil (5) feststellen, umfassen.

6. Entfernbare Greifvorrichtung (1) nach Anspruch 5, **dadurch gekennzeichnet, dass** die Klemmeinrichtungen (25) aus zwei auf beiden Seiten des eine Klemme bildenden Bauteils (5) angebrachten Klemmorganen (27) gebildet sind.

7. Entfernbare Greifvorrichtung (1) nach Anspruch 6, **dadurch gekennzeichnet, dass** jedes Klemmorgan (27) drehbar um eine Achse (33) gelagert ist, die am Greifkörper (2) befestigt ist, und zum einen eine Klemmfläche (35), die exzentrisch zur Achse (33) ist, so dass sie das bewegliche, eine Klemme bildende Bauteil (5) einklemmt, wenn das Klemmorgan (27) in dessen Klemmposition ist, und zum anderen eine Aufnahmefläche (34) zum Zusammenwirken mit einer von einem die Betätigungseinrichtungen (24) bildenden Block (31) getragenen Betätigungsfläche (32), aufweist, so dass die Drehung des Klemmorgans (27) ermöglicht wird, wenn der Block (31) verlagert wird.

8. Entfernbare Greifvorrichtung (1) nach Anspruch 6, **dadurch gekennzeichnet, dass** die Betätigungseinrichtungen (24) aus einem Gehäuse (26) gebildet sind, in dem die Klemmorgane (27) bei der Verlagerung in die Längsrichtung (3) im Zusammenhalt angebracht sind (3), wobei der Greifkörper (2) auf beiden Seiten des eine Klemme bildenden Bauteils (5) eine Rampe (28) aufweist, die so ausgerichtet ist, dass sie das Klemmorgan (27) entsprechend dessen Klemmposition aufnehmen und antreiben kann, wenn das Gehäuse (26) in dessen Verriegelungsposition befördert ist.

9. Entfernbare Greifvorrichtung (1) nach Anspruch 8, **dadurch gekennzeichnet, dass** jedes Klemmorgan (27) aus einem Zylinder (29) gebildet ist.

10. Entfernbare Greifvorrichtung (1) nach Anspruch 8, **dadurch gekennzeichnet, dass** jedes Klemmorgan (27) durch einen Gleitblock (30) gebildet ist, der auf der Seite des eine Klemme bildenden Bauteils (5) einen Gleitbelag, und auf der anderen Seite eine zu der dazugehörigen Rampe (28) im Wesentlichen parallele Fläche besitzt.

11. Entfernbare Greifvorrichtung (1) nach einem der Ansprüche 1 bis 10, **dadurch gekennzeichnet, dass** die Verlagerungseinrichtungen (7) so angepasst sind, dass sie sowohl in deren Öffnungsposition als auch in deren Schließposition in einem stabilen Zustand sind und via einer Zwischenposition mit instabilem Gleichgewicht von einer zur anderen der beiden Positionen übergehen.

12. Entfernbare Greifvorrichtung (1) nach Anspruch 11, abhängig von Anspruch 2 oder einem Anspruch, der davon abhängt, **dadurch gekennzeichnet, dass** die Blockiereinrichtungen (19) und die Verlagerungseinrichtungen (7) so zueinander angeordnet sind, dass die Blockiereinrichtungen (19) in deren Blockierposition übergehen, wenn die Verlagerungseinrichtungen (7) zwischen deren Position des instabilen Gleichgewichts und deren Schließposition sind.

13. Entfernbare Greifvorrichtung (1) nach einem der Ansprüche 1 bis 12, **dadurch gekennzeichnet, dass** die Verlagerungseinrichtungen (7) einen Hebel (8) zur manuellen Betätigung und zum Verlagern der Blockiereinrichtungen (19) aufweisen.
